# EUROPÄISCHE PATENTSCHRIFT

(11) **EP 2 616 731 B1**
(45) Veröffentlichungstag und Bekanntmachung des Hinweises auf die Patenterteilung: **10.08.2016**
(21) Anmeldenummer: 11788353.8
(22) Anmeldetag: 31.08.2011
(51) Int. Cl.: H01R 13/00, H02G 15/22, F16L 25/01

(54) **KUPPLUNGSANORDNUNG SOWIE KUPPLUNGSSTÜCK**
COUPLING ARRANGEMENT AND COUPLING PIECE
SYSTÈME DE RACCORDEMENT ET PIÈCE DE RACCORDEMENT

(30) Priorität: 15.09.2010 DE 102010045523
(43) Veröffentlichungstag der Anmeldung: 24.07.2013
(73) Patentinhaber: Schlögl, Hilde, 92533 Wernberg (DE)
(72) Erfinder: SCHLÖGL, Gerhard, 92533 Wernberg (DE)
(74) Vertreter: Glück Kritzenberger Patentanwälte PartGmbB
(86) Internationale Anmeldenummer: PCT/DE2011/001672
(87) Internationale Veröffentlichungsnummer: WO 2012/034552

(56) Entgegenhaltungen:
- EP-A1- 2 327 916
- US-A1- 2004 023 550
- US-A1- 2009 123 221

## Beschreibung

Die Erfindung betrifft eine Kupplungsanordnung gemäß dem Oberbegriff des Patentanspruches 1.

Im Bereich der Kraftfahrzeuge, Nutzfahrzeuge, Bau- und Landmaschinen erfolgt bislang die Energieübertragung höherer Leistungen über hydraulische und/oder mechanische Konzepte. Zunehmend gibt es Bestrebungen, beim Fahrantrieb sowie beim Antrieb von Nebenaggregaten Elektromotore einzusetzen, deren elektrische Energie von einem Generator bereitgestellt wird, der durch einen Verbrennungsmotor angetrieben wird. Hierzu ist es notwendig am Fahrzeug ein elektrisches Netz vorzusehen, an das beliebige elektrische Erzeuger und Verbraucher wie beispielsweise Generator, Fahrantrieb, Nebenabtriebe oder elektrisch angetriebene Arbeitsgeräte angekoppelt werden können.

Um hohe elektrische Leistungen in einem derartigen elektrischen Netz übertragen zu können, ist es vorteilhaft die elektrischen Leiter mittels einer Kühlflüssigkeit zu kühlen, um damit den notwendigen Leiterquerschnitt bei einer vorgegebenen, zu übertragenden Leistung minimieren zu können. Unter hohen elektrischen Leistungen werden im Rahmen dieser Erfindung insbesondere Leistungen im Bereich von 50KW bis 300KW bei einer elektrischen Stromstärke von 50A bis 400A verstanden.

Zum Anschluss der elektrischen Erzeuger bzw. Verbraucher an ein derartiges elektrisches Netz bzw. zur Kopplung von Leiterstücken sind Kupplungsanordnungen erforderlich, die neben einer elektrischen Verbindung auch eine Verbindung der jeweiligen Kühlkanäle der elektrischen Kabel herstellen.

Bei Auftreten eines Fehlers in einem elektrischen Netz, beispielsweise bei einem Kurzschluss ist es zur Eingrenzung des Bereichs, in dem der Fehler auftritt, notwendig, Teile des elektrischen Netzes abzukoppeln bzw. das elektrische Netz in Teilnetze aufzuteilen, um eine Lokalisation des Fehlers zu ermöglichen.

Aus der US 2004/0023550 A1 ist ein Anschlussstück für flexible fluidische Kunststoffleitungen bekannt, dessen Wandung wenigstens einen elektrischen Leitungsstrang aufweist. Eine Steckaufnahme für die Kunststoffleitung ist mit einer internen fluidischen Leitung im Anschlussstück verbunden, wobei die Steckaufnahme Kopplungsmittel zur elektrischen Verbindung mit dem wenigstens einen elektrischen Leitungsstrang in der Kunststoffleitung aufweist. Wenigstens ein seitlich am Anschlussstück angesetztes Anschlusskabel verbindet eine am vom Anschlussstück entfernten Ende des Kabels angebrachte Sensoranordnung elektrisch mit den Kopplungsmitteln. Der Leitungsstrang verläuft hierbei parallel zum das Fluid in der Kunststoffleitung bzw. der internen fluidischen Leitung führenden Fluidkanal.

Ferner ist aus der EP 2 327 916 A1 eine Kupplungsanordnung umfassend ein erstes und zweites Kupplungsstück bekannt, wobei das erste und zweite Kupplungsstück zur Herstellung einer Steckverbindung ausgebildet sind. Ferner weist die Kupplungsanordnung einen Fluidkanal auf, der bei Herstellung der Steckverbindung hergestellt wird. Das erste und zweite Kupplungsstück weisen jeweils elektrische Verbindungselemente zur Herstellung einer elektrischen Verbindung zwischen den Verbindungselementen der Kupplungsstücke im gekoppelten Zustand auf. Im gekoppelten Zustand verläuft der Fluidkanal entlang der Längsachse der Kupplungsanordnung und die elektrischen Verbindungselemente sind umgeben den Fluidkanal.

Ausgehend hiervon liegt der Erfindung die Aufgabe zugrunde, eine Kupplungsanordnung anzugeben, die Wartungsarbeiten an einem elektrische Energie und Kühlmittel übertragenden Netz vereinfacht. Die Aufgabe wird ausgehend von dem Oberbegriff des Patentanspruches 1 durch dessen kennzeichnende Merkmale gelöst.

Der wesentliche Aspekt der erfindungsgemäßen Kupplungsanordnung ist darin zu sehen, dass die Kupplungsanordnung eine im Übergangsbereich zwischen der gekoppelten und entkoppelten Stellung vorgesehene Zwischenstellung aufweist, in der das erste und zweite Kupplungsstücks zwar flüssigkeitsdicht miteinander verbunden sind, jedoch keine elektrische leitende Verbindung besteht und dass Mittel zur Sicherung des ersten und/oder zweiten Kupplungsstückes in der Zwischenstellung vorgesehen sind. Aufgrund der erfindungsgemäßen Ausbildung kann das zum Übertragen elektrischer Energie und eines unter Druck stehenden Fluids ausgebildete Leitungsnetz jeweils an den Stellen, an denen eine derartige Kupplungsanordnung vorgesehen ist, elektrisch getrennt werden, ohne dabei gleichzeitig auch die flüssigkeitsdichte Ausbildung des Leitungsnetzes aufzuheben und damit verbundene Leckagen zu verursachen. Die elektrische Auftrennung des Leitungsnetzes kann beispielsweise bei Wartungsarbeiten oder bei Isolationsfehlern des elektrischen Leitungsnetzes notwendig sein. Bei der Positionierung der Kupplungsanordnung in der Zwischenstellung wird das elektrische Gesamtnetz in Teilnetze aufgetrennt, so dass eine Fehlersuche beispielsweise eines Isolationsfehlers stark vereinfacht wird. Weiterhin vorteilhaft sind die Mittel zum Sicherung eines Übergangs von der Zwischenstellung in die gekoppelte Stellung vorgesehen. Dadurch wird verhindert, dass beispielsweise bei Wartungs- oder Reparaturarbeiten ein ungewolltes Verbinden der Kupplungsanordnung und ein damit verbundener Übergang in die gekoppelte Stellung erfolgt, so dass die elektrischen Verbindungselemente elektrisch miteinander verbunden werden und das mit der Wartungs- oder Reparaturarbeit betraute Personal mit Spannung führenden Teilen in Berührung kommt. Die Sicherungsmittel zum Verhindern eines Übergangs von der Zwischenstellung in die gekoppelte Stellung und die Sicherungsmittel zum Verhindern eines Übergangs von der Zwischenstellung in die entkoppelte Stellung können auch als kombinierte Sicherungsmittel, beispielsweise als beide Sicherungsfunktionen übernehmender Rastmechanismus realisiert sein. Vorteilhaft ist der zumindest eine Fluidkanal der Kupplungsstücke zumindest abschnittsweise umfangsseitig um das elektrische Verbindungselement des ersten und zweiten Kupplungsstückes angeordnet. Hierdurch wird ein vollständiges Umgeben des elektrischen Leiters bzw. des elektrischen Verbindungselements durch das Fluid und damit eine Kühlung des elektrischen Leiters erreicht. Dadurch können die elektrischen Leiter im Querschnitt kleiner ausgebildet werden, so dass bei einer definierten zu übertragenden Leistung bzw. Stromstärke die Kupplungsanordnung kompakter dimensioniert werden kann. Ferner wird bei Verwendung eines Isolieröls als Fluid eine hohe Isolation des der elektrischen Verbindungselemente gegenüber dem Gehäuse erreicht.

In einer bevorzugten Ausführungsform ist das erste und zweite Kupplungsstück zumindest abschnittsweise ineinander einschiebbar. Beispielsweise ist das erste Kupplungsstück als Stecker und das zweite Kupplungsstück als Dose ausgebildet, wobei beim Einschieben des Steckers in die Dose ein durchgehender Fluidkanal bzw. eine elektrische Verbindung zwischen den Kupplungsstücken in der gekoppelten Stellung hergestellt wird. Dadurch wird eine einfach bedienbare Verbindung der Kupplungsstücke erreicht.

In einem weiteren bevorzugten Ausführungsbeispiel weist das erste und zweite Kupplungsstück jeweils ein Gehäuse mit Dichtflächen ausbildenden Gehäuseabschnitten auf. Dadurch wird zum einen erreicht, dass der gesamte Gehäuseinnenraum der Kupplungsanordnung von Fluid durchströmt wird, zum anderen ergibt sich eine wartungsärmere Abdichtung im Vergleich zur Abdichtung einzelner Kühlkanäle untereinander.

Bevorzugt weist das Gehäuse eines der beiden Kupplungsstücke einen in Steckrichtung abstehenden, umlaufenden Steg auf, der zumindest abschnittsweise eine Dichtfläche ausbildet. Dieser Steg ist beispielsweise zum außenseitigen Umgreifen des Gehäuses des weiteren Kupplungsstücks ausgebildet, so dass dadurch eine Abdichtung der Kupplungsanordnung erfolgt.

In einem weiteren bevorzugten Ausführungsbeispiel weist eines der beiden Kupplungsstücke eine umlaufende, zumindest abschnittsweise eine Dichtfläche ausbildende Nut auf, wobei die Nut beispielsweise zwischen dem Gehäuse eines Kupplungsstücks und einer das Gehäuse zumindest teilweise übergreifenden Überwurfmutter mit einem Innengewinde gebildet wird. Diese Nut ist zur Aufnahme des Stegs des weiteren Kupplungsstücks ausgebildet, wobei dieser Steg ein außenseitiges Gewinde aufweist, das mit einem Innengewinde der Überwurfmutter zur Sicherung der beiden Kupplungsstücke gegeneinander zusammenwirkt. Dadurch wird zum einen eine sichere Befestigung der Kupplungsstücke gegeneinander und damit gleichzeitig eine fluidische Abdichtung der in den Kupplungsstücken ausgebildeten Fluidkanäle erreicht.

In einem besonders bevorzugten Ausführungsbeispiel weisen beide Kupplungsstücke jeweils eine lotrecht zur Steckrichtung und freiendseitig an einem Einsteckbereich verlaufende Kupplungsstückebene auf, wobei das in Richtung der Kupplungsstückebene weisende freie Ende zumindest eines elektrischen Verbindungselements gegenüber der Kupplungsstückebene in Richtung eines Kupplungsstückinnenraums versetzt angeordnet ist. Durch diese versetzte Anordnung des elektrischen Verbindungselements gegenüber der jeweiligen Kupplungsstückebene wird erreicht, dass in der Zwischenstellung zwar eine flüssigkeitsdichte Verbindung der Fluidkanäle der ersten und zweite Kupplungsstücke besteht, die elektrischen Verbindungselemente jedoch örtlich voneinander getrennt und damit elektrisch voneinander isoliert angeordnet sind.

In einem weiteren bevorzugten Ausführungsbeispiel weist zumindest eine der Dichtflächen des ersten und/oder zweiten Kupplungsstücks eine freiendseitig oder im Wesentlichen freiendseitig in unmittelbarer Nähe zur Kupplungsstückebene angeordnete, umlaufende Dichtung auf. Durch die randseitige Anordnung der Dichtung wird die flüssigkeitsdichte Ausbildung der Kupplungsanordnung bei Positionierung der ersten und zweiten Kupplungsstücke in der Zwischenstellung erreicht.

In einem weiteren bevorzugten Ausführungsbeispiel weist das erste und zweite Kupplungsstück ein metallisches Gehäuse auf, wobei die elektrischen Verbindungselemente jeweils elektrisch isoliert im Gehäuse angeordnet sind. Dadurch wird erreicht, dass die Kupplungsanordnung EMV-dicht ist, d.h. dass elektromagnetische Strahlung, die beispielsweise bei Strom oder Spannungsschwankungen der über die elektrischen Verbindungselemente übertragenen elektrischen Energie entsteht, abgeschirmt wird, so dass diese nicht nach außen treten kann.

In einem weiteren bevorzugten Ausführungsbeispiel ist das elektrische Verbindungselement eines der Kupplungsstücke zumindest abschnittsweise zapfenförmig zum Einschieben in eine Ausnehmung des elektrischen Verbindungselements des weiteren Kupplungsstücks ausgebildet. Durch eine derartige Ausbildung wird gleichzeitig beim Ineinanderschieben der Kupplungsstücke durch ein Ineinanderschieben der elektrischen Verbindungselemente eine durchgängige elektrische Verbindung in der Kupplungsanordnung hergestellt.

In einem weiteren bevorzugten Ausführungsbeispiel sind die Sicherungsmittel an einem der Kupplungsstücke angeordnet und zum zumindest abschnittsweisen Hintergreifen eines Gehäuseabschnitts des weiteren Kupplungsstücks oder zum Hintergreifen von an dem Gehäuse des weiteren Kupplungsstücks angeordneten Elementen zur Abziehsicherung ausgebildet. Weiterhin vorzugsweise wird durch die Sicherungsmittel ein gewünschter Verschiebeweg zwischen der gekoppelten Stellung und der Zwischenstellung freigegeben, so dass die Kupplungsstücke eine definierte Weglänge auseinandergezogen werden können und ein weiteres Auseinanderziehen durch das Hintergreifen der Sicherungsmittel blockiert wird. Derartige Sicherungsmittel können beispielsweise ein einen Vorsprung aufweisender Bolzen, eine Spange oder ein Rastmechanismus sein.

Ein weiterer Aspekt der Erfindung betrifft ein Kupplungsstück für eine zumindest einen Fluidkanal und zumindest einen elektrischen Leiter aufweisende Leitung zur Übertragung elektrischer Energie hoher Leistung sowie zur Übertragung eines unter Druck stehenden Fluids bestehend aus zumindest einem Fluidkanal und zumindest einem elektrischen Verbindungselement.

Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es zeigen:
- Fig. 1: beispielhaft ein erstes Kupplungsstück einer erfindungsgemäßen Kupplungsanordnung in einer perspektivischen Ansicht;
- Fig. 2: beispielhaft ein zweites Kupplungsstück mit Sicherungsmittel einer erfindungsgemäßen Kupplungsanordnung in einer perspektivischen Ansicht;
- Fig. 3: beispielhaft eine erfindungsgemäße Kupplungsanordnung in gekoppelter Stellung in einer stirnseitigen Aufsicht;
- Fig. 4: beispielhaft eine erfindungsgemäße Kupplungsanordnung in gekoppelter Stellung in einer in einer Draufsichtdarstellung;
- Fig. 5: beispielhaft eine erfindungsgemäße Kupplungsanordnung in gekoppelter Stellung in einer seitlichen Schnittdarstellung entlang der Versatzschnittlinie A-A gemäß Figur 3;
- Fig. 6: beispielhaft eine erfindungsgemäße Kupplungsanordnung in einer Zwischenstellung in einer seitlichen Schnittdarstellung entlang der Versatzschnittlinie A-A gemäß Figur 3;
- Fig. 7: beispielhaft eine erfindungsgemäße Kupplungsanordnung in einer entkoppelten Stellung in einer seitlichen Schnittdarstellung entlang der Längsachse der Kupplungsanordnung.

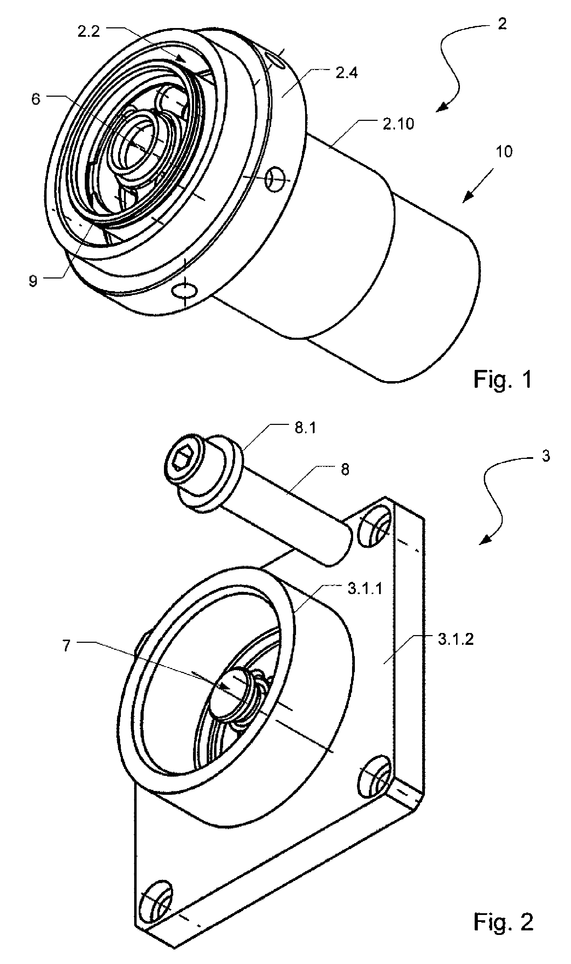

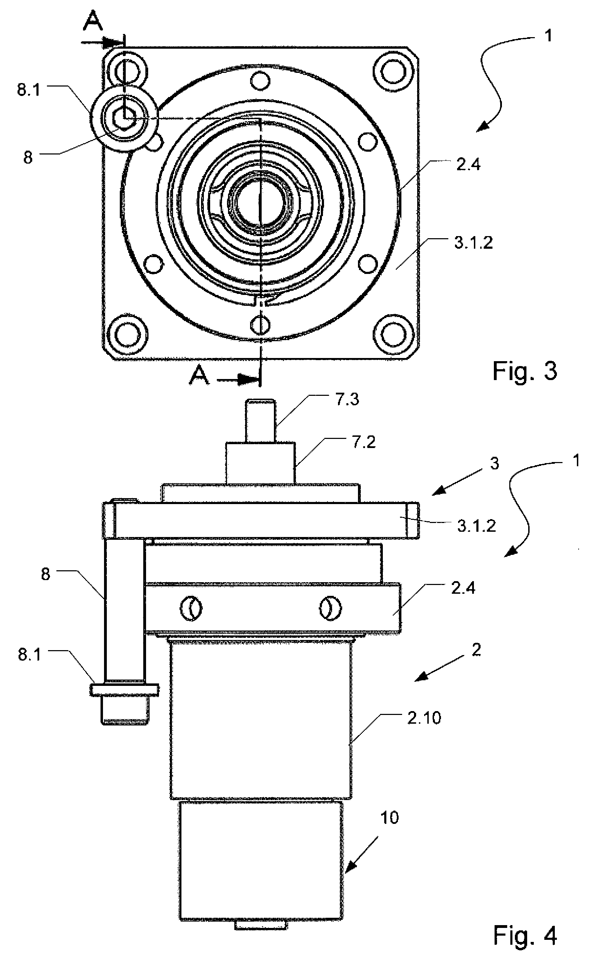

In den Figuren 1 - 7 ist mit dem Bezugszeichen 1 eine erfindungsgemäße Kupplungsanordnung in einem Ausführungsbeispiel gezeigt.

Die in den Figuren dargestellte Kupplungsanordnung 1 besteht im Wesentlichen aus einem ersten und zweiten Kupplungsstück 2, 3, die zur gleichzeitigen Übertragung elektrischer Energie hoher Leistung und zur Übertragung eines unter Druck stehenden Fluids ausgebildet sind. Ferner weist das erste Kupplungsstück 2 einen Kupplungsstückinnenraum KR1 auf, in dem ein elektrisches Verbindungselement 6 aufgenommen ist, das im gezeigten Ausführungsbeispiel näherungsweise mittig entlang der Längsachse LA der Kupplungsanordnung 1 angeordnet ist. Das erste Kupplungsstück 2 weist des Weiteren zumindest einen Fluidkanal 4 auf, der das Kupplungsstück 2 parallel bzw. entlang der Längsachse LA durchzieht.

Das zweite Kupplungsstück 3 weist ebenfalls einen Kupplungsstückinnenraum KR2 auf, in dem ein elektrisches Verbindungselement 7 aufgenommen ist, das im gezeigten Ausführungsbeispiel zentriert im zweiten Kupplungsstück 3 entlang der Längsachse LA verlaufend angeordnet ist. Des Weiteren weist das zweite Kupplungsstück 3 ebenfalls zumindest einen Fluidkanal 5 auf, der ein Durchströmen des zweiten Kupplungsstücks 3 entlang bzw. parallel der Längsachse LA der Kupplungsanordnung 1 mit einem Kühlfluid ermöglicht.

Das erste und zweite Kupplungsstück 2, 3 sind zueinander in unterschiedlicher Stellung positionierbar, und zwar in einer gekoppelten Stellung und einer entkoppelten Stellung.

In der gekoppelten Stellung sind die Fluidkanäle 4, 5 des ersten und zweiten Kupplungsstückes 2, 3 flüssigkeitsdicht miteinander verbunden und eine elektrisch leitfähige Verbindung zwischen den beiden elektrischen Verbindungselementen 6, 7 ist hergestellt. In der entkoppelten Stellung sind die Fluidkanäle 4, 5 voneinander getrennt, d.h. keinesfalls flüssigkeitsdicht miteinander verbunden. Ferner besteht keine elektrisch leitfähige Verbindung zwischen den beiden elektrischen Verbindungselementen 6, 7 des ersten und zweiten Kupplungsstückes 2, 3.

Gemäß dem die Erfindung tragenden Gedanken weist die Kupplungsanordnung 1 darüber hinaus eine Zwischenstellung aufweist, in der das erste und zweite Kupplungsstück 2, 3 zwar flüssigkeitsdicht miteinander verbunden sind, jedoch keine elektrische leitende Verbindung besteht. Zusätzlich umfasst die Kupplungsanordnung 1 Mittel 8 zur Sicherung des ersten und/oder zweiten Kupplungsstückes 2, 3 in der Zwischenstellung. Das erste und zweite Kupplungsstück 2, 3 sind derart ausgebildet, dass diese in der Zwischenstellung zwischen der gekoppelten Stellung und der entkoppelten Stellung positionierbar sind, bei der die Fluidkanäle 4, 5 des ersten und zweiten Kupplungsstücks 2, 3 flüssigkeitsdicht miteinander verbunden sind, jedoch die elektrisch leitfähige Verbindung zwischen den elektrischen Verbindungselementen 6, 7 unterbrochen ist. Als Sicherung gegen ein unbeabsichtigtes Lösen des ersten Kupplungsstücks 2 vom zweiten Kupplungsstück 3 in der Zwischenstellung sind Sicherungsmittel 8 vorgesehen, die ein unbeabsichtigtes Verschieben des ersten und/oder zweiten Kupplungsstückes 2, 3 entlang der Längsachse LA verhindern.

Somit kann ein unter Druck stehendes Fluid führendes Leitungsnetz an den Stellen, an denen eine erfindungsgemäße Kupplungsanordnung verwendet wird, elektrisch getrennt werden kann, so dass beispielsweise die Fehlersuche bei einem Leitungskurzschluss durch sukzessives Abtrennen von Netzteilen vereinfacht werden kann, und zwar ohne dass das in den Leitungen enthaltene Fluid austritt.

Die Kupplungsanordnung 1 ist nach einem "Stecker-Dose-Prinzip" gebildet, wobei beispielsweise das erste Kupplungsstück 2 einen Stecker und das zweite

Kupplungsstück 3 eine Dose ausbildet. Die Verbindung des ersten und zweiten Kupplungsstücks 2, 3 miteinander erfolgt durch ein zumindest abschnittsweises Ineinanderschieben von Endabschnitten der Kupplungsstücke 2, 3, und zwar derart, dass die ersten und zweiten Kupplungsstücke 2, 3 mit ihren jeweiligen Längsachsen achsgleich ausgerichtet werden und mit ihren Längsachsen die gemeinsame Längsachse LA der Kupplungsanordnung 1 bilden.

Das erste und zweite Kupplungsstück 2, 3 weist jeweils ein außenumfangsseitig die Kupplungsstücke 2, 3 begrenzendes Gehäuse 2.1, 3.1 auf, das jeweils einen Kupplungsstückinnenraum KR1, KR2 nach außen hin begrenzt. Die Gehäuse 2.1, 3.1 weisen eine entlang der Längsachse LA der jeweiligen Kupplungsstücke 2, 3 verlaufende durchgehende Öffnung bzw. einen durchgehenden Kanal auf, in dem jeweils zentriert das jeweilige elektrische Verbindungselement 6, 7 aufgenommen ist. Im gezeigten Ausführungsbeispiel werden die elektrischen Verbindungselemente 6, 7 durch im Wesentlichen kreisringförmig ausgebildete Isolierelemente 11, 12 beabstandet zum Gehäuse 2.1, 3.1 gehalten.

Die elektrischen Verbindungselemente 6, 7 sind im Wesentlichen zylindrisch oder abschnittsweise zylindrisch ausgebildet, wobei der Außendurchmesser der elektrischen Verbindungselemente 6, 7 oder der Abschnitte der elektrischen Verbindungselemente 6, 7 kleiner ist als der in den Gehäusen 2.1, 3.1 ausgebildete Kanal, so dass sich um die jeweiligen elektrischen Verbindungselemente 6, 7 herum zumindest abschnittsweise die Fluidkanäle 4, 5 bilden. Die Isolierelemente 11, 12 weisen entlang der Längsachse LA verlaufende Durchbrüche auf, durch die das Fluid durch die Isolierelemente 11, 12 hindurchfließen kann.

Das Gehäuse 2.1 des ersten Kupplungsstücks 2 ist rotationssymmetrisch zur Längsachse LA aufgebaut. Der erste Gehäuseabschnitt 2.6 bildet den Einsteckbereich aus, der außenumfangsseitig zylindrisch aufgebaut ist und außenseitig die Dichtfläche 2.3 ausbildet. In der Dichtfläche 2.3 ist eine umlaufende Einkerbung vorgesehen, die die Dichtung 9 aufnimmt. Die Dichtung 9 ist in unmittelbarer Nähe zum freien Ende des ersten Gehäuseabschnitts 2.6 angeordnet, d.h. sie verläuft in einer Ebene, die nur geringfügig beabstandet zur freiendseitigen Kupplungsstückebene KE1 ist.

An den ersten Gehäuseabschnitt 2.6 schließt sich in entgegen der Steckrichtung SR verlaufender Richtung ein zweiter Gehäuseabschnitt 2.7 an, der radial gegenüber dem ersten Gehäuseabschnitt 2.6 vorsteht. Dieser zweite Gehäuseabschnitt 2.7 ist gestuft mit einem ersten und zweiten Gehäuseabschnittsbereich 2.7.1, 2.7.2 ausgebildet, wobei der erste Gehäuseabschnittsbereich 2.7.1 gegenüber dem zweiten Gehäuseabschnittsbereich 2.7.2 radial vorsteht. An dem zweiten Gehäuseabschnitt 2.7 ist eine Überwurfmutter 2.4 drehbar gehalten, die den zweiten Gehäuseabschnitt 2.7 und den Einsteckbereich 2.6 außenseitig übergreift. Die Überwurfmutter 2.4 weist im Bereich des zweiten Gehäuseabschnitts 2.7 eine komplementäre Stufung im Vergleich zum zweiten Gehäuseabschnitt 2.7 auf, so dass der erste Gehäuseabschnittsbereich 2.7.1 von einem Überwurfmutterabschnitt 2.4.1 hintergriffen wird und damit eine Verschiebung der Überwurfmutter 2.4 gegenüber dem Gehäuse 2.1 des ersten Kupplungsstücks 2 in Steckrichtung SR unterbunden ist.

Im zweiten Gehäuseabschnittsbereich 2.7.2 ist ferner eine Einkerbung vorgesehen, in die ein Sicherungselement, beispielsweise in Form eines Sicherungsrings 2.8 abschnittsweise eingreift. Der vom zweiten Gehäuseabschnittsbereich 2.7.2 abstehende Abschnitt des Sicherungsrings 2.8 sichert hierbei die Überwurfmutter gegenüber einer Verschiebung entgegen der Steckrichtung SR, so dass die Überwurfmutter 2.4 verschiebesicher und drehbar gegenüber dem Gehäuse 2.1 des ersten Kupplungsstücks 2 gehalten ist.

Entgegen der Steckrichtung SR schließt sich an den zweiten Gehäuseabschnitt 2.7 ein dritter Gehäuseabschnitt 2.9 an, der zur Verbindung des ersten Kupplungsstücks 2 mit einer einen elektrischen Leiter 10.1 enthaltenen Leitung 10 ausgebildet ist. Der dritte Gehäuseabschnitt 2.9 ist hierbei im Wesentlichen rohrförmig ausgebildet und weist außenumfangsseitig eine Fassung 2.10 auf, die selbst rohrförmig ausgebildet ist und den dritten Gehäuseabschnitt 2.9 radial beabstandet derart umgreift, dass zwischen dem dritten Gehäuseabschnitt 2.9 und der Fassung 2.10 ein im Querschnitt kreisringförmiger Spalt zur Aufnahme zumindest eines Teilbereichs der Leitungswandung 10.2 ausgebildet ist. Um ein Lösen der Leitung 10 vom ersten Kupplungsstück 2 zu verhindern, erfolgt eine Befestigung der Leitung 10 am ersten Kupplungsstück 2, beispielsweise durch ein Verpressen der Fassung 2.10.

Das elektrische Verbindungselement 6 des ersten Kupplungsstücks 2 ist außenumfangsseitig im Wesentlichen zylinderförmig ausgebildet. Es durchdringt das Isolierelement 11 zentriert in einer passgenauen Bohrung, so dass das elektrische Verbindungselement 6 durch das passgenau im Gehäuse 2.1 aufgenommene Isolierelement 11 im Gehäuse 2.1 des ersten Kupplungsstücks 2 gehalten ist. Über einen radialen Vorsprung 6.1 bzw. über Sicherungsmittel 6.2, beispielsweise einen Sicherungsring, ist das elektrische Verbindungselement 6 in Steckrichtung SR gegenüber dem Isolierelement gehalten, so dass sich acuh entlang der Längsachse eine feste Anordnung desselben im Gehäuse 2.1 des ersten Kupplungsstücks 2 ergibt.

Das elektrische Verbindungselement 6 weist an den beiden einander gegenüberliegenden Stirnseiten jeweils eine sacklochartige Ausnehmung 6.3, 6.4 auf, die das elektrische Verbindungselement 6 über eine Teillänge entlang der Längsachse des elektrischen Verbindungselements 6 durchdringen. Die Ausnehmungen 6.3, 6.4 sind jeweils zentriert im elektrischen Verbindungselement 6 und damit auch zentriert gegenüber dem Gehäuse 2.1 des ersten Kupplungsstücks 2 angeordnet. Die Ausnehmung 6.3 öffnet sich zur Kupplungsstückebene KE1 und ist zur passgenauen Aufnahme des ersten Verbindungselementabschnitts 7.1 des elektrischen Verbindungselements 7 des zweiten Kupplungsstücks 3 ausgebildet. Die sich auf die der Kupplungsstückebene KE1 abgewandte Seite öffnende Ausnehmung 6.4 dient der Aufnahme des elektrischen Leiters 10.1, d.h. bildet eine Aderendhülse, in die der elektrische Leiter 10.1 befestigt, beispielsweise verpresst wird.

Das zweite Kupplungsstück 3 besteht ebenfalls aus einem Gehäuse 3.1 und einem elektrischen Verbindungselement 7, das über ein Isolierelement 12 ausgerichtet im Gehäuse 3.1 angeordnet ist. Das Gehäuse 3.1 des zweiten Kupplungsstücks 3 ist aus einem ersten und zweiten Gehäuseabschnitt 3.1.1, 3.1.2 gebildet, wobei der erste Gehäuseabschnitt 3.1.1 einen im Querschnitt kreisringförmigen Steg 3.2 der Länge l ausbildet. Der zweite Gehäuseabschnitt 3.1.2 ist als Flansch ausgebildet und weist im Inneren eine kreisringförmige Ausnehmung auf, in der konzentrisch das Isolierelement 12 und das elektrische Verbindungselement 7 angeordnet ist. Mittels des zweiten Gehäuseabschnitts 3.1.2 kann das zweite Kupplungsstück 3 beispielsweise an einem Gehäuse eines elektrischen Generators oder eines elektrischen Motors beispielsweise durch eine Verschraubung angebracht werden, so dass über die erfindungsgemäße Kupplungsanordnung 1 elektrische Energie und ein Fluid dem Motor bzw. Generator zugeführt oder abgeführt werden kann.

Das elektrische Verbindungselement 7 weist im gezeigten Ausführungsbeispiel erste bis dritte Verbindungselementabschnitte 7.1, 7.2, 7.3 auf, wobei der erste Verbindungselementabschnitt 7.1 zum Einbringen in die Ausnehmung 6.3 des elektrischen Verbindungselements 6 des ersten Kupplungsstücks 2 ausgebildet ist, der zweite Verbindungselementabschnitt 7.2, der radial gegenüber dem ersten und dritten Verbindungselementabschnitt 7.1, 7.3 übersteht, zur passgenauen Aufnahme im Isolierelement 12 ausgebildet ist und der dritte Verbindungselementabschnitt 7.3 zur Verbindung mit einem beispielsweise generatorseitig oder motorseitig angeordneten elektrischen Leiter ausgebildet ist und beispielsweise zum Einschrauben in diesen elektrischen Leiter ein Außengewinde aufweist. Der erste Verbindungselementabschnitt 7.1 weist in der Nähe seines freien Endes 7.4 vorzugsweise eine oder mehrere umfangsseitige Einkerbungen auf, die zur Aufnahme von ringförmigen Kontaktelementen zur Verbesserung des elektrischen Kontakts zwischen den elektrischen Verbindungselementen 6, 7 im gekoppelten Zustand dienen. Das freie Ende 7.4 des ersten Verbindungselementabschnitts 7.1 ist gegenüber der Kupplungsstückebene KE2 rückversetzt, und zwar um den Rückversatz x.

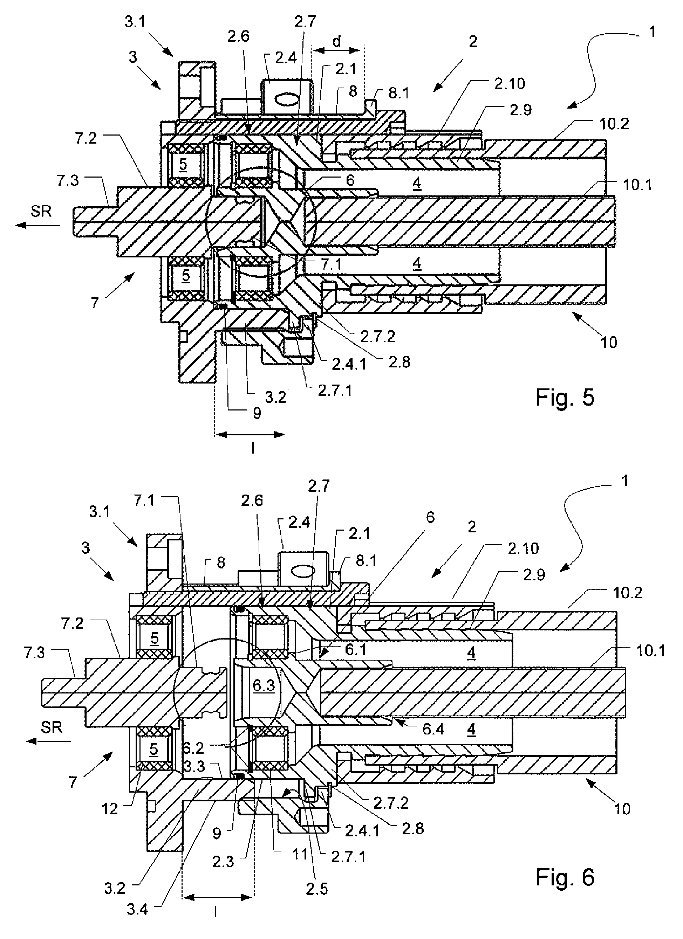

Der Steg 3.2 des Gehäuses 3.1 trägt ein Außengewinde 3.4, das zum Zusammenwirken mit dem Innengewinde 2.5 der Überwurfmutter 2.4 ausgebildet ist. Die im Querschnitt kreisförmige Innenseite des Stegs 3.2 bildet die Dichtfläche 3.3, die in der gekoppelten Stellung der Kupplungsanordnung 1 (Fig. 5) und der zwischen der gekoppelten Stellung und der entkoppelten Stellung befindlichen Zwischenstellung (Fig. 6) zumindest teilweise gegenüber der mit der Dichtung 9 versehenen Dichtfläche 2.3 des ersten Kupplungsstücks 2 zur Anlage kommt, so dass die Fluidkanäle 4, 5 des ersten und zweiten Kupplungsstücks 2, 3 flüssigkeitsdicht miteinander verbunden sind.

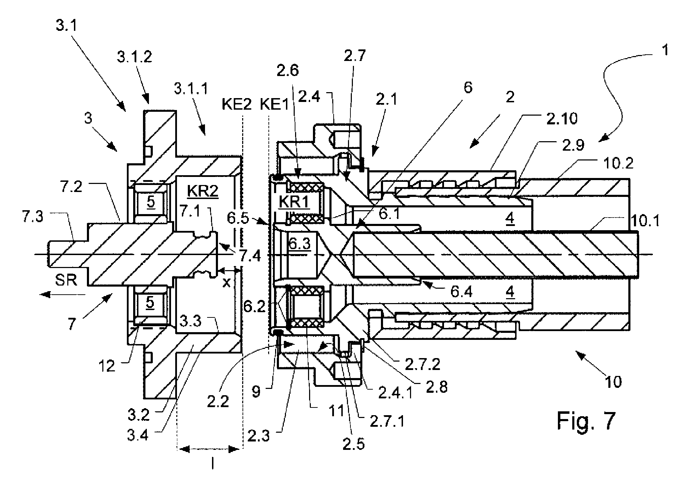

Im Folgenden wird anhand der Figuren 5 - 7 das Verbinden bzw. Trennen der ersten und zweiten Kupplungsstücke 2, 3 und das Zusammenwirken dieser Kupplungsstücke 2, 3 miteinander beschrieben. In Fig. 7 ist der entkoppelte Zustand der erfindungsgemäßen Kupplungsanordnung 1 gezeigt, d.h. die Kupplungsstücke 2, 3 sind derart voneinander getrennt, dass zwischen den elektrischen Verbindungselementen 6, 7 keine elektrische Verbindung besteht und die Fluidkanäle 4, 5 zur Umgebung hin geöffnet sind. Zur Kopplung der ersten und zweiten Kupplungsstücke 2, 3 wird das erste Kupplungsstück 2 gegenüber dem zweiten Kupplungsstück 3 derart positioniert, dass die Kupplungsstückebenen KE1, KE2 zueinander parallel oder im wesentlichen parallel zu liegen kommen und die Längsachsen der ersten und zweiten Kupplungsstücke 2, 3 die gemeinsame Längsachse LA der Kupplungsanordnung bilden. Bei dieser Positionierung lässt sich das erste Kupplungsstück 2 in das zweite Kupplungsstück 3 einführen, wobei zunächst aufgrund des Versatzes des in Richtung der Kupplungsstückebene KE2 weisenden freien Endes 7.4 des elektrischen Verbindungselements 7 in Richtung des Kupplungsstückinnenraums KR2 der Steg 3.3 in die zwischen der Überwurfmutter 2.4 und dem ersten Gehäuseabschnitt 2.6 ausgebildete Nut 2.2 eingeschoben wird, so dass sich durch die Anlage der Dichtung 9 gegenüber der Dichtfläche 3.3 eine flüssigkeitsdichte Verbindung der in den Kupplungsstücken 2, 3 ausgebildeten Fluidkanäle 4, 5 ergibt, zwischen den elektrischen Verbindungselementen 6, 7 jedoch aufgrund des Rückversatzes des freien Endes 7.4 des elektrischen Verbindungselement 7 gegenüber der Kupplungsstückebene KE2 keine elektrische Verbindung zwischen den elektrischen Verbindungselementen 6, 7 hergestellt ist (Fig. 6).

Bei weiterem Einführen des ersten Kupplungsstücks 2 in das zweite Kupplungsstück 3 durch ein Aufschrauben der Überwurfmutter 2.4 auf das Außengewinde des Stegs 3.2 wird der Steg 3.2 zunehmend in die Nut 2.2 geführt und das freie Ende 7.4 des elektrischen Verbindungselements 7 auf das freie Ende 6.5 des elektrischen Verbindungselements 6 zugeführt, so dass bei weiterem Einschieben der zapfenartig ausgebildete erste Verbindungselementabschnitt 7.1 des elektrischen Verbindungselement 7 in die Ausnehmung 6.3 des elektrischen Verbindungselements 6 eingeführt wird und eine elektrische Verbindung zwischen diesen Verbindungselementen 6, 7 hergestellt wird (Fig. 5). Vorzugsweise ist die in Richtung der Längsachse LA gemessene Tiefe t der Nut 2.2 an die Länge I des Stegs 3.2 angepasst, so dass in gekoppelter Stellung der Steg 2.2 stirnseitig am Boden der Nut 2.2 ansteht.

Der Übergang von der gekoppelten Stellung (Fig. 5) in die Zwischenstellung (Fig. 6) erfolgt beim Abschrauben der Überwurfmutter 4 vom Gehäuse 3.1 des zweiten Kupplungsstücks 3. Aufgrund der verschiebungssicheren Anordnung der Überwurfmutter 2.4 gegenüber dem Gehäuse 2.1 mittels dem vom ersten Gehäuseabschnittsbereich 2.7.1 und dem Sicherungsring 2.8 umgriffenen Überwurfmutterabschnitt 2.4.1 erfolgt beim Auf- bzw. Abschrauben der Überwurfmutter 2.4 auf das Außengewinde 3.4 des Stegs 3.2 ebenfalls eine Verschiebung des Gehäuses 2.1 gegenüber dem Gehäuse 3.1.

Die als Abziehsicherung zur Verhinderung eines ungewollten Übergangs von der Zwischenstellung in die entkoppelte Stellung vorgesehenen Sicherungsmittel sind im gezeigten Ausführungsbeispiel durch einen einen Vorsprung 8.1 aufweisenden Bolzen 8 gebildet. Als Sicherungsmittel sind ferner weitere Abziehsicherungen, beispielsweise ein Rastmechanismus oder spangenartige Sicherungsmittel denkbar. Der Vorsprung 8.1 des Bolzens 8 ist im gezeigten Ausführungsbeispiel zum abschnittsweisen Hintergreifen der Überwurfmutter 2.4 in der Zwischenstellung ausgebildet, so dass ein Überführen der Kupplungsanordnung 1 in die entkoppelte Stellung lediglich nach dem Entfernen der Sicherungsmittel möglich ist. In der gekoppelten Stellung (Fig. 5) ist der Vorsprung 8.1 zur Überwurfmutter 2.4 um den Abstand d beabstandet, wobei der Abstand d kleiner ist als die Länge I des Steges 3.2, aber größer als der Rückversatz x des freien Endes 7.4 des ersten Verbindungselementabschnitt 7.1 gegenüber der Kupplungsstückebene KE2. Aufgrund dieser Dimensionierung wird erreicht, dass in der Zwischenstellung bei Anlage der Überwurfmutter 2.4 am Vorsprung 8.1 des Bolzens 8 der Steg 3.2 in die Nut 2.2 eingeführt bleibt und dabei die Fluidkanäle 4, 5 flüssigkeitsdicht miteinander gekoppelt sind, jedoch eine elektrische Trennung der elektrischen Verbindungselemente 6, 7 erfolgt.

In einem bevorzugten Ausführungsbeispiel sind die Gehäuse 2.1, 3.1 der ersten und zweiten Kupplungsstücke 2, 3 aus Metall gebildet. Durch die metallische Ausbildung der Gehäuse 2.1, 3.1 wird eine Abschirmung von elektromagnetischer Strahlung, die durch Schwankungen der Stromstärke bzw. der Spannung auf den elektrischen Verbindungselementen auftritt, zur Umgebung hin erreicht. Aufgrund der Fixierung der elektrischen Verbindungselemente 6, 7 innerhalb der Gehäuse 2.1, 3.1 ausschließlich über hochisolierende Isolierelemente 11, 12 wird ein Kurzschluss zwischen den elektrischen Verbindungselementen 6, 7 und den jeweiligen Gehäusen 2.1, 3.1 wirksam vermieden.

Besonders bevorzugt sind die Gehäuse 2.1, 3.1 der ersten und zweiten Kupplungsstücke 2, 3 in der gekoppelten Stellung und in der Zwischenstellung elektrisch leitend miteinander verbunden, so dass in diesen Stellungen die elektrische Abschirmung über die Kupplungsanordnung hinweg erhalten bleibt.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

So ist es im Rahmen des Erfindungsgedankens möglich, das elektrische Verbindungselement 7 mit seinem freien Ende 7.4 bündig oder im Wesentlichen bündig abschließend mit der Kupplungsstückebene KE2 auszubilden und das elektrische Verbindungselement 6 des ersten Kupplungsstücks 2 gegenüber der Kupplungsstückebene KE1 in den Kupplungsstückinnenraum KR1 rückzuversetzen, so dass in der Zwischenstellung wiederum eine elektrische Trennung zwischen den elektrischen Verbindungselementen 6, 7 durch ein Auseinanderziehen selbiger besteht.

### Bezugszeichenliste

- 1: Kupplungsanordnung
- 2: erstes Kupplungsstück
- 2.1: Gehäuse
- 2.2: Nut
- 2.3: Dichtfläche
- 2.4: Überwurfmutter
- 2.4.1: erster Überwurfmutterabschnitt
- 2.5: Innengewinde
- 2.6: erster Gehäuseabschnitt
- 2.7: zweiter Gehäuseabschnitt
- 2.7.1: erster Gehäuseabschnittsbereich
- 2.7.2: zweiter Gehäuseabschnittsbereich
- 2.8: Sicherungsring
- 2.9: dritter Gehäuseabschnitt
- 2.10: Fassung
- 3: zweites Kupplungsstück
- 3.1: Gehäuse
- 3.1.1: erster Gehäuseabschnitt
- 3.1.2: zweiter Gehäuseabschnitt
- 3.2: Steg
- 3.3: Dichtfläche
- 3.4: Außengewinde
- 4: Fluidkanal
- 5: Fluidkanal
- 6: elektrisches Verbindungselement
- 6.1: Vorsprung
- 6.2: Sicherungsmittel
- 6.3: Ausnehmung
- 6.4: Ausnehmung
- 6.5: freies Ende
- 7: elektrisches Verbindungselement
- 7.1: erster Verbindungselementabschnitt
- 7.2: zweiter Verbindungselementabschnitt
- 7.3: dritter Verbindungselementabschnitt
- 7.4: freies Ende
- 8: Bolzen
- 8.1: Vorsprung
- 9: Dichtung
- 10: Leitung
- 10.1: elektrischer Leiter
- 10.2: Leitungswandung
- 11: Isolierelement
- 12: Isolierelement

- d: Abstand
- l: Länge
- KE1, KE2: Kupplungsstückebene
- KR1, KR2: Kupplungsstückinnenraum
- SR: Steckrichtung
- x: Rücksprung

## Patentansprüche

1. Kupplungsanordnung für eine zumindest einen Fluidkanal und zumindest einen elektrischen Leiter aufweisende Leitung zur Übertragung elektrischer Energie hoher Leistung sowie zur Übertragung eines unter Druck stehenden Fluids bestehend aus einem ersten und zweiten Kupplungsstück (2, 3) mit jeweils zumindest einem Fluidkanal (4, 5) und zumindest einem elektrischen Verbindungselement (6, 7), wobei in einer gekoppelten Stellung des ersten und zweiten Kupplungsstücks (2, 3) eine flüssigkeitsdichte Verbindung der Fluidkanäle (4, 5) und eine elektrisch leitende Verbindung zwischen den elektrischen Verbindungselementen (6, 7) besteht und in einer entkoppelten Stellung des ersten und zweiten Kupplungsstücks (2, 3) die Fluidkanäle (4, 5) und die elektrischen Verbindungselemente (6, 7) voneinander getrennt sind, bei der die Kupplungsanordnung (1) eine zwischen der gekoppelten und entkoppelten Stellung vorgesehene Zwischenstellung aufweist, in der das erste und zweite Kupplungsstück (2, 3) zwar flüssigkeitsdicht miteinander verbunden sind, jedoch keine elektrische leitende Verbindung zwischen den elektrischen Verbindungselementen (6, 7) besteht und dass Sicherungsmittel (8) zum Verhindern eines Übergangs von der Zwischenstellung in die entkoppelte Stellung vorgesehen sind, **dadurch gekennzeichnet, dass** der zumindest eine Fluidkanal (4, 5) zumindest abschnittsweise umfangsseitig um das elektrische Verbindungselement (6, 7) des ersten und zweiten Kupplungsstücks (2, 3) angeordnet ist.

2. Kupplungsanordnung nach Anspruch 1, **dadurch gekennzeichnet, dass** Sicherungsmittel zum Verhindern eines Übergangs von der Zwischenstellung in die gekoppelte Stellung vorgesehen sind.

3. Kupplungsanordnung nach Anspruch 1 oder 2, **dadurch gekennzeichnet, dass** das erste und zweite Kupplungsstück (2, 3) zumindest abschnittsweise ineinander einschiebbar sind.

4. Kupplungsanordnung nach einem der vorhergehenden Ansprüche, **dadurch gekennzeichnet, dass** das erste und zweite Kupplungsstück (2, 3) jeweils ein Gehäuse (2.1, 3.1) mit Dichtflächen (2.3, 3.3) ausbildenden Gehäuseabschnitten (2.6, 3.2) aufweisen.

5. Kupplungsanordnung nach Anspruch 4, **dadurch gekennzeichnet, dass** das Gehäuse (3.1) eines der beiden Kupplungsstücke (3) einen in Steckrichtung (SR) abstehenden, umlaufenden Steg (3.2) aufweist, der zumindest abschnittsweise eine Dichtfläche (3.3) ausbildet.

6. Kupplungsanordnung nach Anspruch 4, **dadurch gekennzeichnet, dass** eines der beiden Kupplungsstücke (2) eine umlaufende, zumindest abschnittsweise eine Dichtfläche (2.3) ausbildende Nut (2.2) aufweist.

7. Kupplungsanordnung nach Anspruch 6, **dadurch gekennzeichnet, dass** die Nut (2.2) zwischen dem Gehäuse (2.1) eines Kupplungsstücks (2) und einer das Gehäuse (2.1) zumindest teilweise übergreifenden Überwurfmutter (2.4) mit einem Innengewinde (2.5) gebildet wird, die mit einem Außengewinde (3.4) an der Außenseite des Stegs (3.2) des weiteren Kupplungsstücks (3) zur Sicherung der beiden Kupplungsstücke (2, 3) gegeneinander zusammenwirkt.

8. Kupplungsanordnung nach einem der vorhergehenden Ansprüche, **dadurch gekennzeichnet, dass** beide Kupplungsstücke (2, 3) jeweils eine lotrecht zur Steckrichtung (SR) und freiendseitig an einem Einsteckbereich verlaufende Kupplungsstückebene (KE1, KE2) aufweisen und dass das in Richtung der Kupplungsstückebene (KE1, KE2) weisende freie Ende (6.5, 7.4) zumindest eines elektrischen Verbindungselements (6, 7) gegenüber der Kupplungsstückebene (KE1, KE2) in Richtung eines Kupplungsstückinnenraums (KR1, KR2) versetzt angeordnet ist.

9. Kupplungsanordnung nach Anspruch 8, **dadurch gekennzeichnet, dass** zumindest eine der Dichtflächen (2.3, 3.3) des ersten und/oder zweiten Kupplungsstückes (2, 3) eine freiendseitig oder im Wesentlichen freiendseitig in unmittelbarer Nähe zur Kupplungsstückebene (KE1, KE2) angeordnete, umlaufende Dichtung (9) aufweist.

10. Kupplungsanordnung nach einem der vorhergehenden Ansprüche, **dadurch gekennzeichnet, dass** das erste und zweite Kupplungsstück (2, 3) ein metallisches Gehäuse (2.1, 3.1) aufweist und dass die elektrischen Verbindungselemente (6, 7) jeweils elektrisch isoliert im Gehäuse (2.1, 3.1) angeordnet sind.

11. Kupplungsanordnung nach Anspruch 10, **dadurch gekennzeichnet, dass** die Gehäuse (2.1, 3.1) des ersten und zweiten Kupplungsstücks (2, 3) in der gekoppelten Stellung und in der Zwischenstellung elektrisch leitend miteinander verbunden sind.

12. Kupplungsanordnung nach einem der vorhergehenden Ansprüche, **dadurch gekennzeichnet, dass** das elektrische Verbindungselement (7) eines der Kupplungsstücke (3) zumindest abschnittsweise zapfenförmig zum Einschieben in eine Ausnehmung (6.3) des elektrischen Verbindungselements (6) des weiteren Kupplungsstücks (2) ausgebildet ist.

13. Kupplungsanordnung nach einem der vorhergehenden Ansprüche, **dadurch gekennzeichnet, dass** die Sicherungsmittel (8) an einem der Kupplungsstücke (3) angeordnet sind und zum zumindest abschnittsweisen Hintergreifen eines Gehäuseabschnitts des weiteren Kupplungsstücks (2) oder zum Hintergreifen eines am Gehäuse (2.1) des weiteren Kupplungsstücks (2) angeordneten Elements (2.4) zur Abziehsicherung ausgebildet ist.

14. Kupplungsanordnung nach einem der vorhergehenden Ansprüche, **dadurch gekennzeichnet, dass** das Sicherungsmittel durch einen Bolzen (8), durch ein spangenartig umgreifendes Element oder durch einen Rastmechanismus gebildet wird.

## Claims

1. A coupling arrangement for a line having at least one fluid channel and at least one electric conductor for the transfer of high-power electric energy as well as for the transfer of a pressurised fluid, the coupling arrangement consisting of first and second coupling pieces (2, 3) with at least one fluid channel (4, 5) in each case and at least one electrical connection element (6, 7), wherein, in a coupled position of the first and second coupling pieces (2, 3), there exists a fluid-tight connection of the fluid channels (4, 5) and an electrically conducting connection between the electrical connection elements (6, 7), and in a decoupled position of the first and second coupling pieces (2, 3), the fluid channels (4, 5) and the electrical connection elements (6, 7) are separated from each other, wherein the coupling arrangement (1) comprises an intermediate position between the coupled and the decoupled position, in which the first and second coupling pieces (2, 3) are, admittedly, connected with each other in a fluid-tight manner, but in which there is no electrically conducting connection between the electrical connection elements (6, 7), and in that safeguarding means (8) are provided for preventing a transition from the intermediate position into the decoupled position, **characterised in that** the at least one fluid channel (4, 5) is arranged, at least section-wise, on the circumference around the electrical connection element (6, 7) of the first and second coupling pieces (2, 3).

2. Coupling arrangement according to claim 1, **characterised in that** safeguarding means are provided for preventing a transition from the intermediate position into the coupled position.

3. The coupling arrangement according to claim 1 or 2, **characterised in that** the first and second coupling pieces (2, 3), at least section-wise, can be pushed into each other.

4. Coupling arrangement according to one of the preceding claims, **characterised in that** the first and second coupling pieces (2, 3) each comprise a housing (2.1, 3.1) with housing sections (2.6, 3.2) forming sealing surfaces (2.3, 3.3).

5. Coupling arrangement according to claim 4, **characterised in that** the housing (3.1) of one of the coupling pieces (3) comprises a circumferential web (3.2) projecting in plug-in direction (SR), which at least section-wise forms a sealing surface (3.3).

6. Coupling arrangement according to claim 4, **characterised in that** one of the coupling pieces (2) comprises a circumferential groove (2.2) forming, at least section-wise, a sealing surface (2.3).

7. Coupling arrangement according to claim 6, **characterised in that** the groove (2.2) is formed between the housing (2.1) of a coupling piece (2) and a cap nut (2.4) enclosing the housing (2.1) at least section-wise, the cap nut having a female thread (2.5), which cooperates with a male thread (3.4) on the outside of the web (3.2) of the further coupling piece (3) for securing the two coupling pieces (2, 3) against each other.

8. Coupling arrangement according to one of the preceding claims, **characterised in that** the two coupling pieces (2, 3) each comprise a coupling piece plane (KE1, KE2) extending perpendicularly to the plug-in direction (SR) and at a plug-in area on the free-end side, and **in that** the free end (6.5, 7.4) pointing in direction of the coupling piece plane (KE1, KE2) of at least one electrical connection element (6, 7) is arranged offset in relation to the coupling piece plane (KE1, KE2) in direction of an internal space (KR1, KR2) of the coupling piece.

9. Coupling arrangement according to claim 8, **characterised in that** at least one of the sealing surfaces (2.3, 3.3) of the first and/or second coupling piece (2, 3) comprises a circumferential seal (9) arranged on the free-end side or essentially on the free-end side in close vicinity to the coupling piece plane (KE1, KE2).

10. Coupling arrangement according to one of the preceding claims, **characterised in that** the first and second coupling pieces (2, 3) comprise a metallic housing (2.1, 3.1) and **in that** the electrical connection elements (6, 7) are arranged electrically insulated in the respective housing (2.1, 3.1).

11. Coupling arrangement according to claim 10, **characterised in that** the housings (2.1, 3.1) of the first and second coupling pieces (2, 3) are connected with each other so as to be electrically conducting when in the coupled position and in the intermediate position.

12. Coupling arrangement according to one of the preceding claims, **characterised in that** the electrical connection element (7) of one of the coupling pieces (3), at least section-wise, is shaped pin-like for pushing into a recess (6.3) of the electrical connection element (6) of the further coupling piece (2).

13. Coupling arrangement according to one of the preceding claims, **characterised in that** the safeguarding elements (8) are arranged on one of the coupling pieces (3) and are configured, at least section-wise, to engage behind a housing section of the further coupling piece (2) or to engage behind an element (2.4) arranged on the housing (2.1) of the further coupling piece (2), as a safeguard against pulling-off.

14. Coupling arrangement according to one of the preceding claims, **characterised in that** the safeguarding means is formed by a bolt (8), by a kind of embracing element or by a latching mechanism.

## Revendications

1. Système de raccordement conçu pour une ligne comprenant au moins un canal de fluide et au moins un conducteur électrique, destiné à la transmission d'énergie électrique de puissance élevée ainsi qu'à la transmission d'un fluide sous pression, composé d'une première et d'une deuxième pièce de raccordement (2, 3) comportant respectivement un canal de fluide (4, 5) et au moins un élément de connexion électrique (6, 7), dans lequel dans une position accouplée de la première et de la deuxième pièce de raccordement (2, 3), une liaison étanche aux fluides des canaux de fluide (4, 5) et une connexion électroconductrice entre les éléments de connexion électriques (6, 7) étant créée, et dans une position non accouplée de la première et de la deuxième pièce de raccordement (2, 3) les canaux de fluide (4, 5) et les éléments de connexion électriques (6, 7) étant séparés les uns des autres, pour lequel le système de raccordement (1) comporte une position intermédiaire prévue entre la position accouplée et non accouplée dans laquelle la première et la deuxième pièce de raccordement (2, 3) sont reliées l'une à l'autre de manière étanche aux fluides, mais aucune connexion électroconductrice n'étant établie toutefois entre les éléments de connexion électriques (6, 7) et des moyens de sécurité (8) étant prévus pour empêcher un passage de la position intermédiaire à la position non accouplée, **caractérisé en ce qu'**au moins un canal de fluide (4, 5) est disposé au moins par sections sur la circonférence autour de l'élément de connexion électrique (6, 7) de la première et de la deuxième pièce de raccordement (2, 3).

2. Système de raccordement selon la revendication 1, **caractérisé en ce que** des moyens de sécurité sont prévus pour empêcher un passage de la position intermédiaire à la position accouplée.

3. Système de raccordement selon la revendication 1 ou 2, **caractérisé en ce que** la première et la deuxième pièce de raccordement (2, 3) peuvent être insérables l'une dans l'autre au moins par sections.

4. Système de raccordement selon l'une quelconque des revendications précédentes, **caractérisé en ce que** la première et la deuxième pièce de raccordement (2, 3) comportent respectivement un boîtier (2.1, 3.1) avec des parties de boîtier (2.6, 3.2) constituant des surfaces d'étanchéité (2.3, 3.3).

5. Système de raccordement selon la revendication 4, **caractérisé en ce que** le boîtier (3.1) d'une des deux pièces de raccordement (3) comporte un segment (3.2) périphérique, s'écartant dans le sens d'insertion (SR) qui constitue au moins par sections une surface d'étanchéité (3.3).

6. Système de raccordement selon la revendication 4, **caractérisé en ce qu'**une des deux pièces de raccordement (2) comporte une rainure (2.2) périphérique, constituant au moins par sections une surface d'étanchéité (2.3).

7. Système de raccordement selon la revendication 6, **caractérisé en ce que** la rainure (2.2) est formée entre le boîtier (2.1) d'une pièce de raccordement (2) et un écrou de raccordement (2.4) venant en prise au moins en partie sur le boîtier (2.1) avec un filetage intérieur (2.5) qui coopère en opposition avec un filetage extérieur (3.4) sur le côté extérieur du segment (3.2) de l'autre pièce de raccordement (3) pour fixer les deux pièces de raccordement (2, 3).

8. Système de raccordement selon l'une quelconque des revendications précédentes, **caractérisé en ce que** les deux pièces de raccordement (2, 3) comportent respectivement un plan de pièce de raccordement (KE1, KE2) passant perpendiculairement au sens d'insertion (SR) et du côté de l'extrémité libre sur une zone d'insertion et **en ce que** l'extrémité libre (6.5, 7.4) tournée en direction du plan de pièce de raccordement (KE1, KE2) d'au moins un élément de connexion électrique (6, 7) est disposée décalée par rapport au plan de la pièce de raccordement (KE1, KE2) en direction d'un espace intérieur de la pièce de raccordement (KR1, KR2).

9. Système de raccordement selon la revendication 8, **caractérisé en ce qu'**au moins une des surfaces d'étanchéité (2.3, 3.3) de la première et/ou de la deuxième pièce de raccordement (2, 3) comporte un joint d'étanchéité périphérique (9) disposé du côté de l'extrémité libre ou pour l'essentiel du côté de l'extrémité libre à proximité directe du plan de la pièce de raccordement (KE1, KE2).

10. Système de raccordement selon l'une quelconque des revendications précédentes, **caractérisé en ce que** la première et la deuxième pièce de raccordement (2, 3) comporte un boîtier métallique (2.1, 3.1) et **en ce que** les éléments de connexion électriques (6, 7) sont respectivement disposés électriquement isolés dans le boîtier (2.1, 3.1).

11. Système de raccordement selon la revendication 10, **caractérisé en ce que** les boîtiers (2.1, 3.1) de la première et de la deuxième pièce de raccordement (2, 3) sont reliées l'un à l'autre de manière électroconductrice dans la position accouplée et dans la position intermédiaire.

12. Système de raccordement selon l'une quelconque des revendications précédentes, **caractérisé en ce que** l'élément de connexion électrique (7) d'une des pièces de raccordement (3) est constitué au moins par sections en forme de tenon pour insertion dans une cavité (6.3) de l'élément de connexion électrique (6) de l'autre pièce de raccordement (2).

13. Système de raccordement selon l'une quelconque des revendications précédentes, **caractérisé en ce que** les moyens de fixation (8) sont disposés sur une des pièces de raccordement (3) et sont constitués pour engager en arrière au moins par sections une partie de boîtier de l'autre pièce de raccordement (2) ou pour engager en arrière un élément (2.4) disposé sur le boîtier (2.1) de l'autre pièce de raccordement (2) afin d'assurer une sécurité contre l'enlèvement.

14. Système de raccordement selon l'une quelconque des revendications précédentes, **caractérisé en ce que** le moyen de fixation est constitué par un boulon (8), par un élément à prise enveloppante de type agrafe ou par un mécanisme d'encliquetage.
